Europäisches Patentamt

European Patent Office

Office européen des brevets

(11) Publication number: **0 426 896 A1**

## EUROPEAN PATENT APPLICATION

(21) Application number: 89120786.2

(22) Date of filing: 09.11.89

(51) Int. Cl.5: **C08J 9/24**, C08J 5/04,
C08J 9/40, //C08L61:06

(43) Date of publication of application:
15.05.91 Bulletin 91/20

(84) Designated Contracting States:
DE FR GB NL

(71) Applicant: **UNITIKA LTD.**
**No. 50, Higashihonmachi 1-chome**
**Amagasaki-shi Hyogo(JP)**

(72) Inventor: **Kishimoto, Soichiro c/o Unitika Ltd**
**Central Research Institut 23, Uji Kozakura**
**Uji-shi Kyoto(JP)**
Inventor: **Echigo, Yoshiaki c/o Unitika Ltd.**
**Central Research Institut 23, Uji Kozakura**
**Uji-shi Kyoto(JP)**

(74) Representative: **Hansen, Bernd, Dr.rer.nat. et al**
**Hoffmann, Eitle & Partner Patentanwälte**
**Arabellastrasse 4 Postfach 81 04 20**
**W-8000 München 81(DE)**

(54) Porous composite sheet and process for producing the same.

(57) A porous composite sheet which comprises a reinforcing fiber and a binder and has interconnecting pores extending from one side of the sheet through the sheet to other side thereof and the following properties: the porosity of the whole sheet is from 40 to 80%, the flexural strength is not lower than 50 kg/cm², the water absorbing rate is not lower than 30 mm/10 sec and the water absorption ratio is not lower than 60% by weight. A process for producing the porous composite sheet is also disclosed.

# POROUS COMPOSITE SHEET AND PROCESS FOR PRODUCING THE SAME

## FIELD OF THE INVENTION

This invention relates to a porous composite sheet which has excellent hydrophilicity and mechanical properties and is suitable for use as humidifying elements of air conditioners, dew condensation resistant panel plates, flap plate core materials of water type felt pens, evaporating plates for removing condensed water from refrigerators, freezers and air conditioners, etc. It also relates to a process for producing such a porous composite sheet.

## BACKGROUND OF THE INVENTION

Heretofore, there have been known processes for producing porous sheets having interconnecting cells (open cells) by sinter molding fine particles of an organic high molecular weight material (such as polyethylene, polypropylene, polystyrene, polymethyl methacrylate or polyacrylonitrile) into a sheet. These porous sheets are widely used in various fields as an air diffuser plate, as a filter medium, etc.

However, these porous sheets are hydrophobic due to the characteristics of the organic high molecular weight materials which are used as the starting materials. Accordingly, their use is limited to certain fields.

Attempts have been made to impart hydrophilicity to these hydrophobic porous sheets.

For example, JP-A-56-74136 (the term "JP-A" as used herein means a "published unexamined Japanese patent application") and JP-A-56-110748 disclose porous sheets having a porosity of 20 to 60% obtained by allowing specific surfactants to coexist during the sinter molding of thermoplastic resin polyacrylonitrile powders.

JP-A-57-109837 and JP-A-59-197439 disclose sinter-molded porous articles having a porosity of 20 to 60% which are composed of sulfonated polyolefins. These patent publications disclose that the molded articles have open cells and are hydrophilic.

JP-A-63-295652 discloses a hydrophilic porous article having a porosity of 30 to 55% obtained by sinter molding a specific polyethylene powder and an inorganic filler in the presence of a surfactant.

In JP-A-63-63727 there are proposed porous molded articles obtained by sinter molding fine particles of a thermosetting phenolic resin which has specific flow characteristics and is a phenolic resin which is somewhat hydrophilic.

However, these porous sheets do not have sufficient mechanical characteristics such as flexural strength. This is because the fine particles of thermo plastic or thermosetting resins are fused together with point bonding upon sintering. Further, they have a porosity of 60% at most.

There have been proposed a porous composite sheet with excellent mechanical characteristics and air permeability which is produced from a reinforcing fiber and a specific thermosetting phenolic resin and a process for the production thereof to solve the above problems (see, JP-A-1-165427). However, the porous composite sheet still has a problem in that a sufficient water absorption rate cannot be obtained when the sheet is used as humidifying elements of air conditioners, dew condensation resistant panel plates, flap plate core materials of water type felt pens, evaporating plates for removing condensed water from refrigerators, freezers and air conditioners or a material for molds such as ceramic molding die, though the sheet can be made hydrophilic to some extent.

## SUMMARY OF THE INVENTION

An object of the present invention is to provide a porous composite sheet which has a high porosity and has excellent mechanical characteristics, such as flexural strength, even though it's porosity is high, and which has excellent hydrophilicity, particularly, a high water absorption rate.

Another object of the present invention is to provide a process for producing easily such a sheet.

The present inventors conducted studies to solve the above-described problems associated with the prior art and found that a porous composite sheet with excellent mechanical characteristics and hydrophilicity can be obtained by depositing specific fine particles on a porous composite sheet composed of a reinforcing fiber and a sintered binder resin. The present invention was reached on the basis of this finding.

Accordingly, the present invention provides, in one aspect, a porous composite sheet which is comprised of a reinforcing fiber and a binder, and which has interconnecting pores (open cells) extending from one side of the sheet through the sheet to the other side thereof and has such properties that the porosity of the whole sheet is from 40 to 80%, the flexural strength is not lower than 50 kg/cm$^2$, the water absorbing rate is not lower than 30 mm/10 sec and the water absorption ratio is not lower than 60% by weight.

The present invention provides, in another aspect, a process for producing such a porous composite sheet comprising steps of:

heating a sheet composed of a reinforcing fiber and a powdered binder under pressure to sinter the binder, thus fixing the binder to the reinforcing fiber to form a porous composite sheet; and

depositing fine silica particles having a particle diameter of from 0.01 $\mu$m to 1 $\mu$m on the porous composite sheet.

## DETAILED DESCRIPTION OF THE INVENTION

The porous composite sheet of the present invention is comprised of a reinforcing fiber and a sintered binder.

Examples of the reinforcing fiber include synthetic fibers composed of an organic fibers such as polyester fiber, polyamide fiber and polyolefin fiber and inorganic fibers such as glass fiber and carbon fiber. Any of a nonwoven fabric, woven fabric or knitted fabric composed of long fibers or short fibers can be used, so long as they are in the form of a sheet. It is generally preferred that the fiber density is within the range of from 10 to 1,000 g/m$^2$.

Among the reinforcing fibers, polyester fibers, particularly polyethylene terephthalate fibers, are preferred. A nonwoven fabric composed of long fibers is preferred.

The preferred range of the fiber density or weight of the fiber sheet varies depending on the type and form of the fibers. For example, the fiber density (for the fiber alone) is preferably in the range of about 100 to 700 g/m$^2$ in the case of a nonwoven fabric composed of long fibers of polyethylene terephthalate fiber. When the fiber density of the reinforcing fiber in the fiber sheet is too high, there is the possibility that there will be difficulty in allowing the binder, such as a phenolic resin, to penetrate into the depth of the sheet in an impregnation stage described hereinafter, while when the fiber density is too low, the mechanical characteristics, such as the flexural strength of the resulting composite sheet, are lowered.

Any sinter moldable resin(s) can be used as the binder of the present invention, without particular limitation. However, thermoplastic or thermosetting resins having a melting point or softening point of not higher than 200°C are preferred. These resins are used in the form of a powder which allows sinter molding to be carried out. The powder may be in any form of sphere, star, cubic form, whisker type fiber, etc. The powdered binder resins have a particle diameter of preferably not larger than about 300 $\mu$m, more preferably from about 100 to about 250 $\mu$m.

Among the binder resins, sinter moldable phenolic resins are preferred. Examples of the phenolic resins include thermosetting phenol-aldehyde resins obtained by reacting a phenol with an aldehyde and thermosetting nitrogen-containing phenol-aldehyde resins obtained by reacting a phenol with an aldehyde and a nitrogen-containing compound (a nitrogen content: about 1 to about 10 wt%).

The sheet of the present invention has interconnecting pores having a size of about 1 $\mu$m to 200 $\mu$m (continuous pores), (open cells) extending from one side of the sheet therethrough to the other side thereof. The interconnecting pores may extend from one side of the sheet through the sheet to the other side thereof in such a manner that the pores are "folded" in a zigzag form and pass through the gaps of the reinforcing fiber which constitutes the sheet. Alternatively, the interconnecting pores may extend in a relatively straight line form from one side of the sheet through the sheet to the other side thereof.

The presence or absence of the interconnecting pore in the present invention is measured in the following manner. A disk 10 mm in diameter is cut out from the final composite sheet 1 mm in thickness. Air is allowed to flow through the disk at a rate of 1 normal liter (Nl)/min. The innerconnecting pores exist when the pressure loss is 1,000 mm H$_2$O or lower. When air is allowed to flow through the disk as described above, a lower pressure loss means a higher proportion of inner-connecting pore in the composite sheet. Further, the pressure loss represents the degree of air permeability. In the sheet of the present invention, the pressure loss is preferably 500 mm H$_2$O or lower, particularly preferably 200 mm H$_2$O or lower.

EP 0 426 896 A1

It is necessary that the composite sheet of the present invention have a porosity (%) of from 40 to 80%. The porosity (%) is the ratio in percentage of the volume of the pores to the total volume of the composite sheet. The porosity (%) can be measured in the following manner. The dry weight W (g) and volume V (cm³) of the final composite sheet are measured. The sheet is then ground into powder which permits the true density ρ (g/cm³) of the composite sheet to be measured. The porosity (%) is calculated from the following formula.

$$\text{Porosity } (\%) = \left(1 - \frac{W}{\rho \times V}\right) \times 100$$

When the porosity is lower than 40%, the ratio of the innerconnecting pores is low and the air permeability is reduced, while when the porosity exceeds 80%, the composite sheet is apt to show lower mechanical characteristics such as flexural strength.

The final composite sheet of the present invention has a flexural strength of not lower than 50 kg/cm². The higher the flexural strength is, the better the sheet is. However, a flexural strength in the range of 50 to 300 kg/cm² is most suitable. When the flexural strength is lower than 50 kg/cm², there is the problem that the sheet is easily broken.

The above flexural strength values are measured according to JIS-K-7203₁₉₈₂ (flexural test method for rigid plastics).

The final composite sheet of the present invention has a water absorbing rate or water absorption rate of not lower than 30 mm/10 sec. The preferred maximum for the water absorbing rate or water absorption rate is 100 mm/10 sec.

The water absorbing rate is measured in the following manner. A sheet having a width of 20 mm and a length of 150 mm is cut out from the composite sheet. The sheet is hung vertically in the direction of its length. Its lower part (30 mm in length) is immersed in water at 20°C. After 10 seconds, the level the water has ascended above the 30 mm immersed length is measured. The measured value is referred to as the water absorbing rate.

When the water absorbing rate is lower than 30 mm/10 sec, the transpiration rate is undesirably lowered when the sheet is used as a water evaporation sheet.

It is necessary that the final composite sheet of the present invention have a water absorption ratio of not lower than 60% by weight. The preferred maximum for the water absorption ratio is 90% by weight.

The water absorption ratio (wt%) represents the ratio of water which is retained by the sheet when the composite sheet is thoroughly immersed in water at 20°C for 30 minutes.

The water absorption ratio can be measured in the following manner. The dry weight W₁ (g) of the composite sheet is measured. The sheet is completely immersed in water and then taken out from water, and an excess of water on the surface is slightly wiped off. The weight W₂ (g) of the sheet in the wet form is measured. The water absorption ratio (wt%) is calculated from the following formula.

$$\text{Water absorption ratio } (wt\%) = \frac{W_2 - W_1}{W_2} \times 100$$

When the water absorption ratio is lower than 60% by weight, the water retention capability of the sheet is undesirably low.

The porous composite sheet of the present invention is preferably produced by the process of the present invention.

In the practice of the present invention, a sheet composed of a reinforcing fiber and a binder is heated under pressure to sinter the binder, thus fixing the binder to the fiber to form a porous composite sheet, and fine silica particles having an average particle diameter of not larger than 1 μm are deposited on the porous composite sheet, thus producing the porous composite sheet of the present invention.

More particularly, a sheet composed of a reinforcing fiber such as nonwoven fabric is impregnated with an aqueous dispersion of a powder of a thermosetting phenolic resin where the resin has elongation of 3 to 15 cm according to Japanese Industrial Standard, JIS-K-6911₁₉₇₉, 5.3.2 [Molding material (disc flow)] which prescribes thermal flow characteristics.

The Japanese Industrial Standard, JIS-K-6911₁₉₇₉, 5.3.2 [molding material (disc flow)] is a test method in which the elongation of a resin is evaluated by the size of the diameter of a molded disk obtained by

4

compression molding the resin. Namely, 5 g of a phenolic resin is put in conical form in a mold kept at a temperature of $160°C \pm 3°C$. A load of 2,500 kgf is applied to the phenolic resin for 60 seconds to thereby compression mold the resin into a disk. The diameter (the mean value of the major diameter and the minor diameter of the molded disk being referred to as the diameter of the disk) of the resulting molded disk is referred to as the elongation of the resin.

Sinter moldable phenolic resins suitable for use in the present invention are thermosetting phenolic resins in which the elongation thereof is in the range of from 3 to 15 cm as measured by the above-described test method.

When phenolic resins are used having such thermal flow characteristics that the elongation is less than 3 cm, sinterability is insufficient and there is difficulty in obtaining the desired porous composite sheet or there is the possibility that only a composite sheet having poor mechanical characteristics is formed, even though a composite sheet can be obtained. When phenolic resins are used having such thermal flow characteristics that the elongation exceeds 15 cm, the surface of the porous sheet is completely molten during heating under pressure and, as a result, there is difficulty in obtaining a porous composite sheet having interconnecting pores.

The phenolic resins of the present invention are used in the form of an aqueous dispersion to impregnate the reinforcing fiber therewith. Examples of mediums for dispersing the resins, that is, dispersion mediums, include water, ethanol, methanol, methyl ethyl ketone and ethylene glycol. The preferred amount of such mediums is 20 wt% or less in the case of the organic solvents. Among these dispersion mediums, water is particularly preferred, because it is inexpensive and easy to handle.

The concentration of the phenolic resin powder in the aqueous dispersion is preferably in the range of 5 to 50% by weight based on the weight of total aqueous dispersion. When the concentration is lower than 5% by weight, there is the possibility that the resin will precipitate and a stable dispersion cannot be obtained. When the concentration is higher than 50% by weight, unevenness in impregnation is liable to be caused when the reinforcing fiber is impregnated with the aqueous dispersion.

The amount of the resin used for the impregnation of the reinforcing fiber is in the range of 10 to 90% by weight, preferably 30 to 70% by weight, based on the weight of the resulting final composite sheet. This is the amount of resin in the final composite sheet. When the amount of the resin is less than 10% by weight, there is difficulty in obtaining sufficient mechanical characteristics, while when the amount is more than 90% by weight, porosity is reduced, the proportion of interconnecting pores is reduced and air permeability is lowered.

If desired, fillers such as powders of alumina, silica, talc, carbon black, graphite, molybdenum disulfide and coloring materials such as a dye and a pigment may optionally be added to the dispersion medium for the phenolic resin, which is used in the impregnation of the sheet composed of a reinforcing fiber. In such a case, the preferred size and amount of the fillers used are 100 μm or less and 10 to 100 wt% based on the weight of the resin, respectively.

In the present invention, excess of the dispersion is squeezed out by means of squeeze rollers to remove any excess of the dispersion with which the sheet composed of a reinforcing fiber is impregnated. The squeezing ratio is determined by taking the concentration of the dispersion and the amount of the resin to be deposited on the reinforcing fiber sheet under consideration. It is preferred that the squeezing ratio is 60 to 200% owf (the amount of the remaining dispersions based on the weight of the fiber).

The reinforcing fiber sheet having the uncured resin bonded thereto is then dried. Preferably, drying is conducted in atmosphere at a temperature of 80 to 110°C for 10 to 30 minutes.

After drying, the uncured thermosetting phenolic resin bonded to the reinforcing fiber sheet is heated under pressure to thereby sinter and cure the resin, thus forming the porous composite sheet. The sintering is carried out in atmosphere preferably at a temperature of 140 to 180°C under a pressure of 1 to 10 kg/cm² for 1 to 20 minutes, particularly preferably at a temperature of 150 to 170°C under a pressure of 3 to 6 kg/cm² for 3 to 7 minutes, by means of a press type molding machine.

Subsequently, fine silica particles having a particle size of from 0.01 μm to 1 μm are deposited on the porous composite sheet which has been cured by heating under pressure. Preferably, the addition of fine silica particles is made by impregnating the porous composite sheet with an aqueous dispersion of fine silica particles and drying the sheet. For example, the impregnation time is about 2 hours, the temperature of the dispersion is about 20°C to 40°C, and the drying is carried out in atmosphere by a dryer. The aqueous dispersion of fine silica particles is a dispersion formed by dispersing fine particles of silicic anhydride, hydrated silicic acid or amorphous silica in water, that is, it is a silica colloid. Such colloidal fine silica particles have a particle diameter of not larger than 1 μm, preferably 0.02 to 0.2 μm.

When fine silica particles having a particle diameter of larger than 1 μm are used, there is the possibility that unevenness in deposition will result, or the bonding power is poor, whereby a sufficient amount of silica particles is not deposited and the water absorbing rate and the water absorption ratio are lowered.

In the process of the present invention, fine silica particles are deposited on the porous composite sheet by impregnating the sheet with an aqueous dispersion of fine silica particles as described above.

Examples of solvents for use in dispersing the fine silica particles, that is, dispersion mediums, include water as well as solvents such as ethanol, methanol, acetone and methyl ethyl ketone. These organic solvents can be used in an amount of 100 wt%. Among these dispersion mediums, water is particularly preferred, because water is well compatible with the porous composite sheet, is inexpensive, is easy to handle and is easily dried off.

The concentration of fine silica particles in the dispersion medium is preferably in the range of 1 to 40% by weight of the dispersion. When the concentration is lower than 1% by weight, the amount of fine silica particles deposited on the porous composite sheet is reduced and there is the problem that sufficient hydrophilicity cannot be imparted to the sheet, while when the concentration exceeds 40% by weight, there is the possibility that the sheet will be unevenly impregnated or fine silica particles will be scattered from the sheet after drying.

The dispersion of fine silica particles may optionally contain anion, nonion and cation surfactants or silane coupling agents such as methyltrimethoxysilane, methyltriethoxysilane, phenyltrimethoxysilane, γ-glycidyloxypropyltrimethoxysilane, γ-methacryloxypropyltrimethoxysilane, γ-(N-β-aminoethyl)-aminopropyltrimethoxysilane and γ-aminopropyltrimethoxysilane to improve the adhesion of fine particles to the sheet. It is preferred that the amounts of the surfactants and silane coupling agents are 0.1 to 3 wt% and 1 to 10 wt%, based on the weight of silica, respectively.

The amount of fine silica particles deposited on the porous composite sheet which has been sintered and cured by heating under pressure is in the range of 0.01 to 15% by weight, preferably 0.1 to 10% by weight, based on the weight of the final porous composite sheet. When the amount of fine silica particles is less than 0.01% by weight, there is the possibility that a sufficient water absorbing rate cannot be obtained, while when the amount exceeds 15% by weight, there is the possibility that fine silica particles will be scattered after drying, as described hereinafter.

Subsequently, the porous composite sheet having fine silica particles deposited thereon is dried. Drying is preferably conducted at a temperature of 60 to 110°C for 10 to 30 minutes.

In this way, there is formed a porous composite sheet which is a sheet composed of the reinforcing fiber and the cured phenolic resin and which has interconnecting pores extending from one side of the sheet through the sheet to the other side thereof. The sheet has properties such that the porosity of the whole sheet is 40 to 80%, the flexural strength is not lower than 50 kg/cm$^2$, the water absorbing rate is not lower than 30 mm/10 sec and the water absorption ratio is not lower than 60% by weight. Generally, the surface (except parts through which the interconnecting pores extend) of the composite sheet is covered with the sintered phenolic resin by conducting the heating under pressure.

When a porous composite sheet having excellent surface smoothness in particular is required, such porous composite sheet can be produced by mixing short fibers having a fiber length of 1 to 30 mm, particularly 3 to 25 mm, with a powder of the binder resin to form a web, heating under pressure to form a porous composite sheet and then depositing the fine silica particles thereon in the same way as earlier described.

Phenolic resins used in the present invention can be produced, for example, in accordance with the methods as described in U.S. Patents 4,640,971, 4,778,695 and 4,839,445.

Phenolic resins which are preferably used in the present invention can be produced, for example, by reacting a phenol or a novolak resin with an aldehyde in the presence of a suspension stabilizer and a basic compound in an aqueous medium. Examples of phenols include phenol and phenol derivatives. Examples of the phenol derivatives include $C_1$ to $C_9$ alkyl group-substituted m-alkylphenols, o-alkylphenols and p-alkylphenols such as m-cresol, p-tert-butylphenol, o-propylphenol, resorcinol, bisphenol A and halogenated phenol derivatives where part (e.g., 1 to 3) or all of hydrogen atoms of the alkyl group or benzene nucleus is replaced by chlorine or bromine. These phenol compounds may be used either alone or as a combination of two or more of them.

Examples of aldehydes which are used in the production of the phenolic resins include formaldehyde, acetaldehyde, formalin, paraformaldehyde and furfural.

The aldehydes are used in an amount of 1 to 2 mols, preferably 1.1 to 1.4 mols, per mol of the phenols. Alternatively, the aldehydes are used in an amount of preferably not more than 50% by weight based on the amount of the novolak resin.

Suspension stabilizers which are used in the production of the phenolic resins are substantially water-insoluble inorganic salts or water-soluble organic high molecular weight materials. Preferred examples of the substantially water-insoluble inorganic salts include calcium fluoride, magnesium fluoride and strontium fluoride. The substantially water-insoluble inorganic salts may be added directly to the reaction system used to form the phenolic resin production. Alternatively, two or more water-soluble inorganic salts capable of forming the substantially water-insoluble inorganic salts during the course of the reaction for the production of the phenolic resin may be added. As water-soluble inorganic salts capable of forming the substantially water-insoluble inorganic salts, there may be used, for example, at least one member selected from the group consisting of sodium fluoride, calcium fluoride and ammonium fluoride and at least one member selected from the group consisting of calcium, magnesium and strontium chlorides, sulfates and nitrates.

Examples of water-soluble organic high molecular weight materials include gum arabic, ghatti gum, hydroxyguar gum, partial hydrolyzates of polyvinyl alcohol, hydroxyethyl cellulose, carboxymethyl cellulose, soluble starches and agar agar. These water-soluble organic high molecular weight materials may be used either alone or as a mixture of two or more thereof. Alternatively, the substantially water-insoluble inorganic salts and the water-soluble organic high molecular materials may be used in combination.

Examples of basic compounds include sodium hydroxide, potassium hydroxide, calcium hydroxide, magnesium hydroxide, aqueous ammonia, hexamethylenetetramine, dimethylamine, diethylenetriamine and polyethyleneimine. Among these, aqueous ammonia and hexamethylenetetramine are particularly preferred. These basic compounds may be used either alone or as a mixture of two or more thereof.

Water and organic solvent-containing water can be used as the aqueous medium for use in the production of the phenolic resins. The aqueous medium is used in such an amount that the amount, on a solid basis, of the resulting phenolic resin is preferably 20 to 70% by weight, particularly 30 to 60% by weight.

The reaction temperature in the production of the phenolic resins of the present invention is from 70 to 100°C, particularly preferably 80 to 95°C. The reaction time is preferably 20 to 120 minutes, particularly 40 to 90 minutes.

After the completion of the reaction, the reaction mixture is cooled to 40°C or lower. Solid-liquid separation is carried out by means of conventional filtration or centrifugation and the desired product is washed with water and dried.

In the porous composite sheet of the present invention, the reinforcing fiber and the binder resin are combined together and hence the porous composite material of the present invention has excellent mechanical characteristics such as flexural strength. Porosity is high so that the sheet is lightweight and easy to handle. The sheet has interconnecting pores so that it is excellent in air permeability. Further, porosity is high so that the ratio of the interconnecting pores is high. In addition, the sheet has a high water absorbing rate and a high water absorption ratio.

Accordingly, the porous composite sheet of the present invention can be used in many fields as an air diffuser plate, a filter medium, a water absorbing sheet, a water transpiration sheet, etc. The sheet is suitable for use as humidifying elements of air conditioners, dew condensation resistant panel plates, flap plate core materials of water type felt pens, evaporating plates for removing condensed water from refrigerators, freezers and air conditioners and as a material for molds such as a material for molding a ceramic slurry. Materials for molds require good mechanical characteristics, in particular. Thus, the sheet can be used for various purposes.

In the process of the present invention, thermosetting phenolic resins having specific thermal flow characteristics are used so that the porous composite sheet can be obtained by a simple operation.

The present invention is now illustrated in greater detail by reference to the following examples which, however, are not to be construed as limiting the invention in any way. All percentages are by weight based on the total composition at issue, unless indicated to the contrary.

REFERENTIAL EXAMPLES 1 TO 4

200 g of phenol, 20 g of an aqueous solution of 37 wt% formaldehyde (formalin), 70 g of water, 18 g of hexamethylenetetramine and 8.4 g of calcium chloride were placed in a one liter three-necked flask with stirring to form a uniform solution. 40 g of an aqueous solution of 10 wt% sodium fluoride was added to the solution with stirring and the mixture was heated to 85°C over a period of 60 minutes. Stirring was continued while maintaining this temperature.

After the temperature of the mixture reached 85°C, 50 g of a sample was recovered after 10 minutes, 40 minutes, 90 minutes and then 150 minutes (four samples in all). Each sample was cooled to 30°C and 0.3 liter of water was added thereto. After supernatant liquid was removed, microspherical resin in the lower

7

layer was washed with water, air dried at ambient and then dried at 50 to 60°C for 12 hours under reduced pressure (not higher than 5 mm Hg) to obtain a phenolic resin having an average particle diameter of about 50 μm. These phenolic resins were referred to as A, B, C and D, respectively.

REFERENTIAL EXAMPLES 5 TO 7

200 g of novolak resin [trade name: Novolak #6000 (melting point: 70 to 76°C), a product of Mitsui Toatsu Chemicals, Inc.], 150 g of water and 4 g of gum arabic were placed in a one liter glass flask and the mixture was heated to 95°C with stirring for 1 hour. A solution of 20 g of hexamethylenetetramine in 150 g of water was added thereto. Stirring was continued for 150 minutes while maintaining the temperature at 95°C.

After the completion of the addition of the aqueous solution of hexamethylenetetramine, 50 g of a sample was recovered after 10 minutes, 60 minutes and then 150 minutes (three samples in all). Each sample was cooled to 30°C and 0.3 liter of water was added thereto. Microspherical resin was separated by filtration with filter paper, washed with water, air dried at ambient and then dried at 35°C under reduced pressure (not higher than 5 mm Hg) to obtain a phenolic resin having an average particle diameter of about 200 μm. These phenolic resins were referred to as E, F and G.

EXAMPLES 1 TO 4, COMPARATIVE EXAMPLES 1 TO 3

Elongation of resins A to G was measured according to the earlier described JIS test procedure. The results are shown in Table 1.

TABLE 1

|  | Resin | Elongation (cm) of Resin | Dispersion Size (μm) of Resin |
|---|---|---|---|
| Example 1 | B | 7.0 | 20 to 30 |
| Example 2 | C | 5.5 | 20 to 30 |
| Example 3 | F | 5.0 | 40 to 50 |
| Example 4 | E | 13.5 | 40 to 50 |
| Comparative Example 1 | A | 16.0 | 20 to 30 |
| Comparative Example 2 | D | 2.5 | 20 to 30 |
| Comparative Example 3 | G | 2.0 | 40 to 50 |

100 g of each of resins A to G was redispersed in 400 g of water and wet crushed in a ball mill made of stainless steel to obtain an aqueous dispersion of each of resins A to G. These dispersions were referred to as aqueous phenolic resin dispersions $A_1$ to $G_1$, respectively.

Nonwoven fabric of long fibers of polyethylene terephthalate fiber (weight: 400 $g/m^2$; diameter: 20 μm) was impregnated with each of aqueous phenolic resin dispersions $A_1$ to $G_1$. After the dispersions were squeezed by means of squeeze rollers, the fabrics were dried at 100°C for 20 minutes to obtain polyethylene terephthalate nonwoven fabrics having uncured phenolic resins bonded thereto. The amounts of the phenolic resins bonded were in the range of 220 to 240 $g/m^2$.

These samples were heated under a pressure of 1 $kg/cm^2$ using a pressing machine preheated to 160°C for 10 minutes to cure the phenolic resins, thus obtaining composite sheets 1 mm in thickness.

A dilute aqueous solution of sodium silicate was neutralized with an acid and concentrated to obtain an aqueous dispersion of fine silica particles (average colloidal particle diameter: 0.1 μm; concentration of particles: 3% by weight).

Each of the cured sheets was impregnated with the aqueous dispersion of fine silica particles at 30°C for 2 hours and dried at 100°C for 20 minutes to obtain composite sheets having fine silica particles deposited thereon. The amount of fine silica particles was in the range of 1 to 2% by weight.

These sheets were referred to as composite sheets $A_2$ to $G_2$ corresponding to aqueous phenolic resin

dispersions $A_1$ to $G_1$.

## COMPARATIVE EXAMPLE 4

The procedure of Example 2 was repeated except that there was used an aqueous silica dispersion obtained by dispersing 20 g of silicic anhydride particles having a particle diameter of 2.5 $\mu$m as fine silica particles in 180 g of water. There was thus obtained a composite sheet which was referred to as composite sheet $H_2$. The amount of fine silica particles deposited was 0.03% by weight.

The porosity and flexural strength of each of composite sheets $A_2$ to $H_2$ were measured according to the earlier described JIS test procedure. The results are shown in Table 2.

TABLE 2

|  | Composite Sheet | Porosity | Flexural Strength |
|---|---|---|---|
|  |  | (%) | (kg/cm$^2$) |
| Example 1 | $B_2$ | 63 | 110 |
| Example 2 | $C_2$ | 61 | 90 |
| Example 3 | $F_2$ | 60 | 80 |
| Example 4 | $E_2$ | 65 | 120 |
| Comparative Example 1 | $A_2$ | 62 | 120 |
| Comparative Example 2 | $D_2$ | 61 | 20 |
| Comparative Example 3 | $G_2$ | 60 | 15 |
| Comparative Example 4 | $H_2$ | 61 | 90 |

It is apparent from Table 2 that composite sheets $A_2$ to $H_2$ have a porosity in the range of 60 to 65%. Regarding flexural strength, composite sheets $A_2$, $B_2$, $C_2$, $E_2$, $F_2$ and $H_2$ had a flexural strength suitable for practical use, whereas the flexural strength of composite sheets $D_2$ and $G_2$ was unsuitable for practical use owing to its breakage.

A disk 10 mm in diameter was cut out from each of composite sheets $A_2$, $B_2$, $C_2$, $E_2$, $F_2$ and $H_2$. Air was allowed to flow through each disk at a rate of 1 Nl/min. Pressure loss was measured according to the earlier described test procedure to examine the presence or absence of interconnecting pores. The results are shown in Table 3.

TABLE 3

|  | Composite Sheet | Pressure Loss |
|---|---|---|
|  |  | (mm H$_2$O) |
| Example 1 | $B_2$ | 90 |
| Example 2 | $C_2$ | 60 |
| Example 3 | $F_2$ | 30 |
| Example 4 | $E_2$ | 130 |
| Comparative Example 1 | $A_2$ | -- |
| Comparative Example 4 | $H_2$ | 60 |

When air was allowed to flow through comparative composite sheet $A_2$ at a rate of 1 Nl/min, the pressure loss was very high and measurement could not be made. This means that composite sheet $A_2$ had no interconnecting pores.

It is apparent from Table 3 that when air was allowed to flow through composite sheets $B_2$, $C_2$, $F_2$ and

$E_2$ of the present invention and composite sheet $H_2$ of Comparative Example 4 at 1 Nl/min, the pressure loss was as low as 130 mm $H_2O$ or below, i.e., these sheets had interconnecting pores.

The sheets of Examples 1 to 4 of the present invention and Comparative Example 4 were examined and it was found that most of pores were interconnecting pores.

A sheet having a width of 20 mm and a length of 150 mm was cut out from each of composite sheets $B_2$, $C_2$, $F_2$, $E_2$ and $H_2$. The water absorbing rate and water absorption ratio were measured as earlier described. The results are shown in Table 4.

TABLE 4

|  | Composite Sheet | Water Absorption Ratio | Water Absorbing Rate |
|---|---|---|---|
|  |  | (wt%) | (mm/10 sec) |
| Example 1 | $B_2$ | 70 | 40 |
| Example 2 | $C_2$ | 75 | 50 |
| Example 3 | $F_2$ | 80 | 60 |
| Example 4 | $E_2$ | 65 | 35 |
| Comparative Example 4 | $H_2$ | 35 | 10 |

It is apparent from Table 4 that comparative composite sheet $H_2$ had a water absorption ratio of 35 wt% and a water absorbing rate of 10 mm/10 sec, and was inferior in hydrophilicity, while composite sheets $B_2$, $C_2$, $E_2$ and $F_2$ of the present invention had a water absorption ratio in the range of 65 to 80 wt% and a water absorbing rate in the range of 35 to 60 mm/10 sec and thus were sufficiently hydrophilic.

While the invention has been described in detail and with reference to specific embodiments thereof, it will be apparent to one skilled in the art that various changes and modifications can be made therein without departing from the spirit and scope thereof.

## Claims

1. A porous composite sheet which comprises a reinforcing fiber and a sintered binder with interconnecting pores extending from one side of the sheet through the sheet to other side thereof and which has the following properties:
the porosity of the whole sheet is from 40 to 80%, the flexural strength is not lower than 50 kg/cm², the water absorbing rate is not lower than 30 mm/10 sec and the water absorption ratio is not lower than 60% by weight.

2. A porous composite sheet as in claim 1, wherein said reinforcing fiber is polyester fiber.

3. A porous composite sheet as in claim 1, wherein said binder is a phenolic resin.

4. A porous composite sheet as in claim 3, wherein said phenolic resin is a thermosetting phenolic resin.

5. A porous composite sheet as in claim 1, wherein the amount of the binder is 10 to 90% by weight based on the total weight of the porous composite sheet.

6. A process for producing a porous composite sheet which comprises the steps:
heating a sheet comprising a reinforcing fiber and a powdered binder under pressure to sinter the binder, thus fixing the binder to the reinforcing fiber to form a porous composite sheet; and
depositing fine silica particles having a particle diameter of from 0.01 μm to 1 μm on said porous composite material.

7. A process for producing a porous composite sheet as in claim 6, wherein said reinforcing fiber is polyester fiber.

8. A process for producing a porous composite sheet as in claim 6, wherein said binder is a phenolic resin.

9. A process for producing a porous composite sheet as in claim 8, wherein said phenolic resin is a thermosetting phenolic resin.

10. A process for producing a porous composite sheet as in claim 6, wherein the amount of the binder is 10 to 90% by weight based on the total weight of the porous composite sheet.

11. A process for producing a porous composite sheet as in claim 6, wherein said heating is carried out at a temperature of 140 to 180 °C under a pressure of 1 to 10 kg/m$^2$.

12. A process for producing a porous composite sheet as in claim 6, wherein said heating is carried out at a temperature of 150 to 170 °C under a pressure of 3 to 6 kg/m$^2$.

13. A process for producing a porous composite sheet as in claim 6, wherein the amount of fine silica particles deposited on the porous composite sheet is 0.01 to 15% by weight based on the weight of the porous composite sheet.

14. A process for producing a porous composite sheet as in claim 6, wherein the amount of fine silica particles deposited on the porous composite sheet is 0.1 to 10% by weight based on the weight of the porous composite sheet.

15. A process for producing a porous composite sheet which comprises the steps:

impregnating a sheet comprising a nonwoven fabric with an aqueous dispersion of a powdered thermosetting phenolic resin having an elongation of 3 to 15 cm as measured according to Japanese Industrial Standard, JIS-K-6911$_{1979}$, 5.3.2 [Molding material (disk flow)] which prescribes thermal flow characteristics;

squeezing an excess of said aqueous dispersion;

drying the impregnated sheet;

heating the dried sheet under pressure to sinter and cure said phenolic resin, thus forming a porous composite sheet; and

depositing fine silica particles having a particle diameter of from 0.01 μm to 1 μm on said porous composite sheet.

16. A process for producing a porous composite sheet as in claim 15, wherein the amount of said thermosetting phenolic resin for impregnating said sheet is 10 to 90% by weight based on the weight of the resulting composite sheet.

17. A process for producing a porous composite sheet as in claim 15, wherein the amount of said thermosetting phenolic resin for impregnating said sheet is 30 to 70% by weight based on the weight of the resulting composite sheet.

18. A process for producing a porous composite sheet as in claim 15, wherein said squeezing ratio is 60 to 200%.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| D,Y | DATABASE WPIL, AN 89-230792 (32), Derwent Publications Ltd, London, GB; & JP-A-1 165 427 (UNITIKA K.K.) * Abstract * | 1-18 | C 08 J 9/24<br>C 08 J 5/04<br>C 08 J 9/40 //<br>C 08 L 61:06 |
| Y | GB-A- 981 505 (C.L. WILSON) * Claims * | 1-18 | |
| A | CHEMICAL ABSTRACTS, vol. 82, no. 24, 16th June 1975, page 149, abstract no. 158619m, Columbus, Ohio, US; & JP-A-74 119 963 (YUASA BATTERY CO., LTD) 15-11-1974 | | |

**TECHNICAL FIELDS SEARCHED (Int. Cl.5)**

C 08 J

The present search report has been drawn up for all claims

| Place of search | Date of completion of the search | Examiner |
|---|---|---|
| THE HAGUE | 10-07-1990 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)